# EUROPEAN PATENT SPECIFICATION

(11) **EP 4 088 951 B1**
(45) Date of publication and mention of the grant of the patent: **21.02.2024**
(21) Application number: 22170186.5
(22) Date of filing: 27.04.2022
(51) Int. Cl.: B60C 11/03, B60C 11/13

(54) **TIRE**
REIFEN
PNEUMATIQUE

(30) Priority: 10.05.2021 JP 2021079949
(43) Date of publication of application: 16.11.2022
(73) Proprietor: Sumitomo Rubber Industries, Ltd., Kobe-shi, Hyogo-ken 651-0072 (JP)
(72) Inventor: KITAMURA, Yukako, Kobe-shi, 651-0072 (JP); KNISPEL, Oliver, Kobe-shi, 651-0072 (JP)
(74) Representative: Manitz Finsterwald Patent- und Rechtsanwaltspartnerschaft mbB

(56) References cited:
- EP-A1- 3 213 933
- US-A1- 2016 152 084
- US-A1- 2020 001 658

## Description

### BACKGROUND OF THE INVENTION

### Field of the Invention

The present invention relates to a tire.

### Background Art

JP 2018-012437 A suggests a tire having an outer middle land portion and an inner middle land portion. The outer middle land portion has a plurality of outer middle lug grooves formed so as to extend from a main groove and terminate in the outer middle land portion. The inner middle land portion has a plurality of inner middle lateral grooves formed so as to extend across the inner middle land portion. The tire is expected to enhance wet performance by the outer middle lug grooves and the inner middle lateral grooves.

US 2016/0152084 A1 discloses a tire according to the preamble of claim 1. Further tires are disclosed, for example, in US 2020/0001658 A1 and EP 3 213 933 A1.

In recent years, tires are required to further enhance wet performance. Meanwhile, tires are also required to reduce uneven wear.

The present invention has been made in view of the aforementioned circumstances, and a main object of the present invention is to provide a tire that enhances wet performance while reducing uneven wear.

### SUMMARY OF THE INVENTION

The present invention is directed to a tire including a tread portion. The tread portion includes a plurality of circumferential grooves extending continuously in a tire circumferential direction between a first tread end and a second tread end, and a plurality of land portions demarcated by the plurality of circumferential grooves. The plurality of circumferential grooves include a first shoulder circumferential groove disposed between a tire equator and the first tread end, and a first crown circumferential groove disposed between the first shoulder circumferential groove and the tire equator. The plurality of land portions include a first middle land portion demarcated between the first shoulder circumferential groove and the first crown circumferential groove. The first middle land portion has a plurality of first middle lateral grooves formed therein. At least one of the first middle lateral grooves includes a shallow groove portion extending from the first crown circumferential groove so as to be inclined relative to a tire axial direction. The first middle land portion includes an acute-angle-side corner portion demarcated between the first crown circumferential groove and the shallow groove portion in a tread planar view. A chamfered portion is formed at an end portion, in the tire circumferential direction, of the acute-angle-side corner portion. The chamfered portion includes an inclined surface that extends from a ground contact surface of the first middle land portion toward an end of the acute-angle-side corner portion, and is inclined relative to a tire radial direction.

In the tire of the present invention, the shallow groove portion includes an inner side portion on the first crown circumferential groove side, and the inner side portion includes a first groove edge that extends almost parallel to the tire axial direction and is connected to the first crown circumferential groove, and a second groove edge that is inclined relative to the tire axial direction and is connected to the first crown circumferential groove.

In the tire of the present invention, the first groove edge preferably forms a boundary between the ground contact surface of the first middle land portion and the inclined surface of the chamfered portion.

In the tire of the present invention, the first groove edge preferably extends linearly.

In the tire of the present invention, the shallow groove portion preferably includes the inner side portion on the first crown circumferential groove side, a depth changing portion connected to the inner side portion, and a constant depth portion connected to the depth changing portion. The depth changing portion preferably has a depth reduced toward the constant depth portion. The constant depth portion preferably extends with a constant depth.

In the tire of the present invention, the depth changing portion preferably has a groove width reduced toward the constant depth portion.

In the tire of the present invention, one of groove edges of the shallow groove portion preferably extends linearly from the inner side portion to the constant depth portion.

In the tire of the present invention, an angle between the first crown circumferential groove and the shallow groove portion is preferably 20 to 45°.

In the tire of the present invention, each first middle lateral groove preferably includes a body portion extending from the shallow groove portion to the first shoulder circumferential groove.

In the tire of the present invention, the body portion is preferably disposed at an angle less than an angle of the shallow groove portion, relative to the tire axial direction.

In the tire of the present invention, a maximum depth of the body portion is preferably greater than a maximum depth of the shallow groove portion.

The tire of the present invention has the above-described structure, and can thus enhance wet performance while reducing uneven wear.

### BRIEF DESCRIPTION OF THE DRAWINGS

FIG. 1 is a development of a tread portion according to one embodiment of the present invention;
FIG. 2 is an enlarged view of a first middle land portion shown in FIG. 1;
FIG. 3 is an enlarged view of a first middle lateral groove shown in FIG. 2;
FIG. 4 is a partial side view of an end portion of the first middle land portion shown in FIG. 3;
FIG. 5 is a cross-sectional view taken along a line B-B in FIG. 3;
FIG. 6 is a cross-sectional view taken along a line C-C in FIG. 3;
FIG. 7 is an enlarged view of the first middle land portion, a second middle land portion, and a crown land portion in FIG. 1;
FIG. 8 is an enlarged view of a first shoulder land portion shown in FIG. 1;
FIG. 9 is an enlarged view of a second shoulder land portion shown in FIG. 1; and
FIG. 10 is a development of a tread portion of a tire of a comparative example.

### DETAILED DESCRIPTION

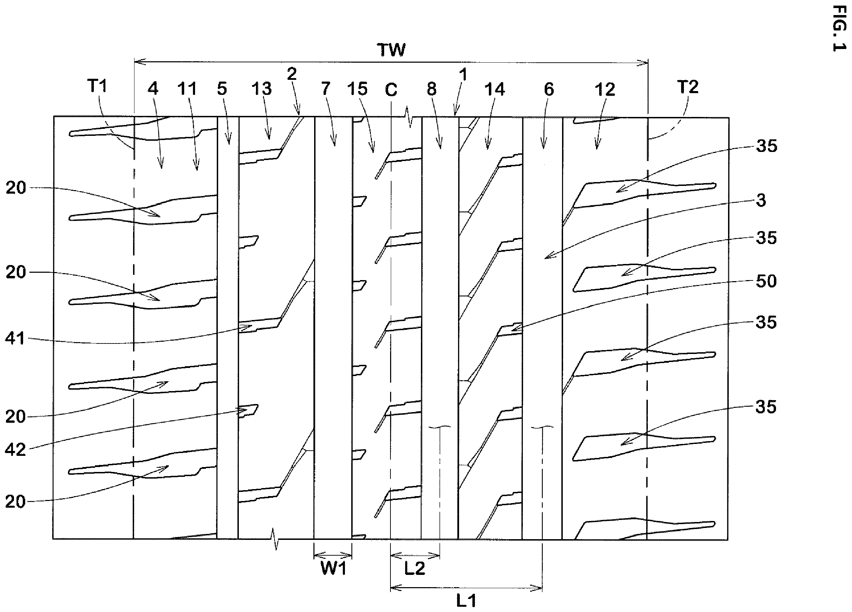

One embodiment of the present invention will be described below with reference to the drawings. FIG. 1 is a development of a tread portion 2 of a tire 1 according to one embodiment of the present invention. The tire 1 of the present embodiment is preferably used as, for example, a pneumatic tire for a passenger car. However, the present invention is not limited thereto. The tire may be applied to a heavy duty pneumatic tire or a non-pneumatic tire the inside of which is not inflated with pressurized air.

As shown in FIG. 1, the tread portion 2 of the present invention includes a plurality of circumferential grooves 3 that extend continuously in the tire circumferential direction between a first tread end T1 and a second tread end T2, and a plurality of land portions 4 demarcated by the plurality of circumferential grooves 3. The tire 1 of the present embodiment is structured as a so-called five-rib tire in which the tread portion 2 is divided into five land portions 4 by four circumferential grooves 3. However, the present invention is not limited to such a structure.

In the present embodiment, the tread portion 2 has, for example, a designated mounting direction to a vehicle. Thus, the first tread end T1 is disposed on the outer side of the vehicle when the tire is mounted to the vehicle, and the second tread end T2 is disposed on the inner side of the vehicle when the tire is mounted to the vehicle. The mounting direction to a vehicle is, for example, indicated on a sidewall portion (not shown) by characters or symbols. However, the tire 1 of the present invention is not limited to such a structure, and the mounting direction to a vehicle may not necessarily be designated.

The first tread end T1 and the second tread end T2 each correspond to the outermost ground contact position in the tire axial direction when the tire 1 in a normal state is in contact with a plane at a camber angle of 0° under a normal load.

The "normal state" represents a state in which a tire is mounted on a normal rim and is inflated to a normal internal pressure and no load is applied to the tire when the tire is a pneumatic tire for which various standards are defined. For non-pneumatic tires and tires for which various standards are not defined, the normal state represents a standard use state, corresponding to a purpose of use of the tire, in which the tire is not mounted to a vehicle and no load is applied to the tire. In the description herein, unless otherwise specified, dimensions and the like of components of the tire are represented as values measured in the normal state.

The "normal rim" represents a rim that is defined by a standard, in a standard system including the standard on which the tire is based, for each tire, and is, for example, "standard rim" in the JATMA standard, "Design Rim" in the TRA standard, or "Measuring Rim" in the ETRTO standard.

The "normal internal pressure" represents an air pressure that is defined by a standard, in a standard system including the standard on which the tire is based, for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The "normal load" represents a load that is defined by a standard, in a standard system including the standard on which the tire is based, for each tire, for pneumatic tires for which various standards are defined. The normal load is "maximum load capacity" in the JATMA standard, the maximum value recited in the table "TIRE LOAD LIMITS AT VARIOUS COLD INFLATION PRESSURES" in the TRA standard, or "LOAD CAPACITY" in the ETRTO standard. For non-pneumatic tires and tires for which various standards are not defined, the "normal load" represents a load that acts on one tire in a standard mounting state of the tire. The "standard mounting state" represents a state in which a tire is mounted to a standard vehicle corresponding to a purpose of use of the tire and the vehicle is stationary on a flat road surface in a state where the vehicle can run.

The plurality of circumferential grooves 3 include a first shoulder circumferential groove 5 and a first crown circumferential groove 7. The first shoulder circumferential groove 5 is disposed between a tire equator C and the first tread end T1, and is disposed closest to the first tread end T1 among the plurality of circumferential grooves 3. The first crown circumferential groove 7 is disposed between the first shoulder circumferential groove 5 and the tire equator C.

Furthermore, in the present embodiment, the plurality of circumferential grooves 3 include a second shoulder circumferential groove 6 and a second crown circumferential groove 8. The second shoulder circumferential groove 6 is disposed closest to the second tread end T2 among the plurality of circumferential grooves 3. The second crown circumferential groove 8 is disposed between the second shoulder circumferential groove 6 and the tire equator C.

A distance L1 in the tire axial direction from the tire equator C to the groove center line of the first shoulder circumferential groove 5 or the second shoulder circumferential groove 6 is, for example, preferably 25% to 35% of a tread width TW. A distance L2 in the tire axial direction from the tire equator C to the groove center line of the first crown circumferential groove 7 or the second crown circumferential groove 8 is, for example, preferably 5% to 15% of the tread width TW. The tread width TW represents a distance in the tire axial direction from the first tread end T1 to the second tread end T2 in the normal state.

In the present embodiment, for example, each of the circumferential grooves 3 linearly extends parallel to the tire circumferential direction. For example, each of the circumferential grooves 3 may extend in a wavy manner.

A groove width W1 of each circumferential groove 3 is preferably at least 3 mm. Furthermore, the groove width W1 of each circumferential groove 3 is, for example, preferably 4.0% to 8.5% of the tread width TW. In the present embodiment, the first shoulder circumferential groove 5 has the smallest groove width among the plurality of circumferential grooves 3. However, the present invention is not limited to such a structure. The depth of each circumferential groove 3 is, for example, preferably 5 to 10 mm in a case where the tire 1 is a pneumatic tire for a passenger car.

In the present invention, the plurality of land portions 4 include a first middle land portion 13. The first middle land portion 13 is demarcated between the first shoulder circumferential groove 5 and the first crown circumferential groove 7.

Furthermore, in the present embodiment, the land portions 4 include a first shoulder land portion 11, a second shoulder land portion 12, a second middle land portion 14, and a crown land portion 15. The first shoulder land portion 11 includes the first tread end T1, and is demarcated so as to be disposed outward of the first shoulder circumferential groove 5 in the tire axial direction. The second shoulder land portion 12 includes the second tread end T2, and is demarcated so as to be disposed outward of the second shoulder circumferential groove 6 in the tire axial direction. The second middle land portion 14 is demarcated between the second shoulder circumferential groove 6 and the second crown circumferential groove 8. The crown land portion 15 is demarcated between the first crown circumferential groove 7 and the second crown circumferential groove 8.

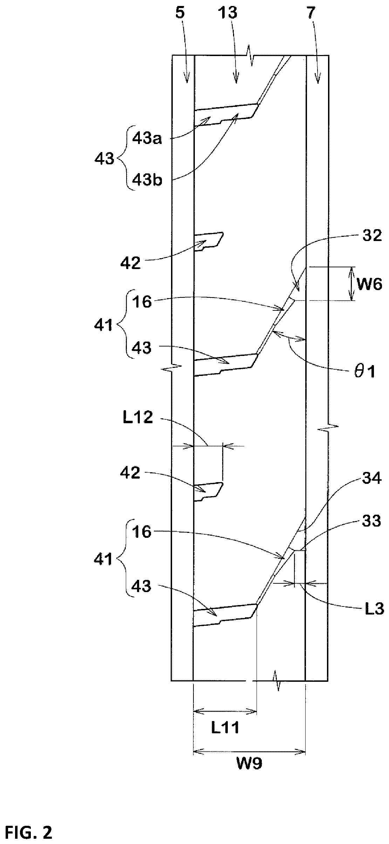

FIG. 2 is an enlarged view of the first middle land portion 13. As shown in FIG. 2, the first middle land portion 13 has a plurality of first middle lateral grooves 41 formed therein.

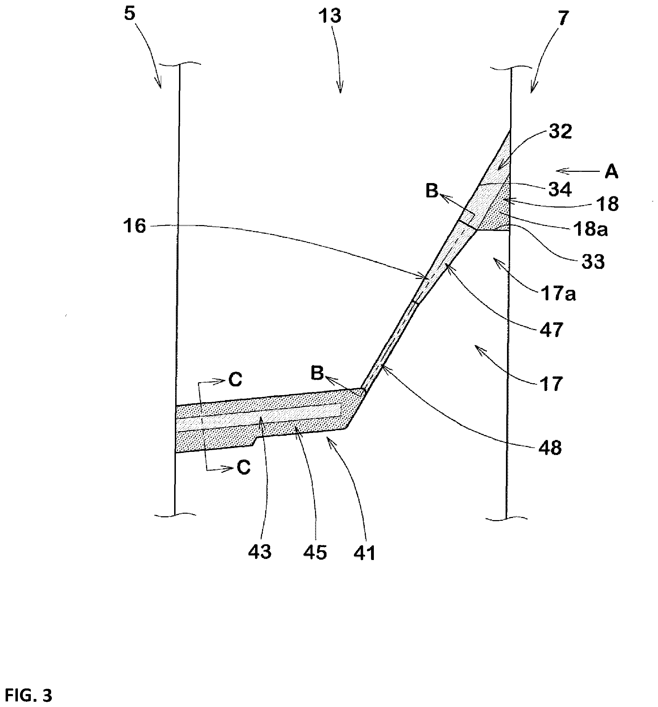

FIG. 3 is an enlarged view of the first middle lateral groove 41 shown in FIG. 2. As shown in FIG. 3, at least one of the first middle lateral grooves 41 includes a shallow groove portion 16 that extends from the first crown circumferential groove 7 so as to be inclined relative to the tire axial direction. Thus, the first middle land portion 13 includes an acute-angle-side corner portion 17 demarcated between the first crown circumferential groove 7 and the shallow groove portion 16 in a tread planar view. A chamfered portion 18 is formed at an end portion 17a, in the tire circumferential direction, of the acute-angle-side corner portion 17. In FIG. 3, dots are formed in an opening region of the first middle lateral groove 41, and the chamfered portion 18 has dots formed so as to be thicker than those at the other portions in the opening region.

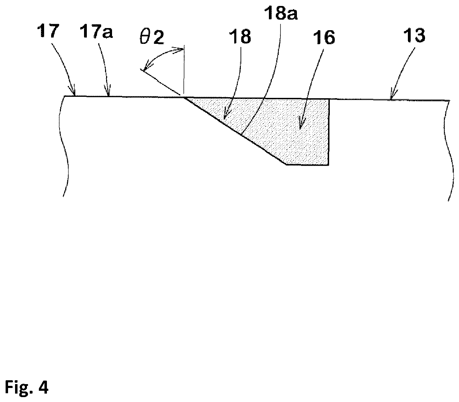

FIG. 4 is a partial side view of the end portion 17a as viewed in the direction of an arrow A in FIG. 3. In FIG. 4, dots are formed in an opening region of the shallow groove portion 16 on the side surface of the first middle land portion 13. As shown in FIG. 4, the chamfered portion 18 includes an inclined surface 18a that extends from the ground contact surface of the first middle land portion 13 toward the end of the acute-angle-side corner portion 17, and is inclined relative to the tire radial direction. In the present invention, the above-described structure is adopted, whereby wet performance can be enhanced while uneven wear is reduced. The following mechanism may be inferred as the reason.

The shallow groove portion 16 included in the first middle lateral groove 41 supplies a frictional force in the tire axial direction by the edges during running on a wet road surface, thereby enhancing wet performance. Meanwhile, the chamfered portion 18 is formed at the end portion 17a, in the tire circumferential direction, of the acute-angle-side corner portion 17, thereby reducing uneven wear of the corner portion 17. Furthermore, the chamfered portion 18 having such a structure can aid in pushing back water in the first crown circumferential groove 7 toward the rear portion of the tire by rotation of the tire during running on a wet road surface. Therefore, drainage performance at the first crown circumferential groove 7 can be enhanced. The tire of the present invention is assumed to enhance wet performance while maintaining steering stability on a dry road surface by the above-described mechanism.

The structure of the present embodiment will be described below in more detail. The structures described below represent specific modes of the present embodiment.
Therefore, needless to say, also when the structures described below are not provided, the present invention can exhibit the above-described effects. Also when any one of the structures described below is applied alone to the tire of the present invention having the above-described features, improvement of performance corresponding to each structure can be expected. Furthermore, in a case where some of the structures described below are applied in combination, complex performance improvement corresponding to the structures can be expected.

As shown in FIG. 2, in the present embodiment, an angle θ1 between the first crown circumferential groove 7 and the shallow groove portion 16 is 20 to 45°. The maximum depth of the shallow groove portion 16 is, for example, 1.0 to 4.0 mm and preferably 1.0 to 3.0 mm.

As shown in FIG. 3, in the present embodiment, the shallow groove portion 16 includes an inner side portion 32 on the first crown circumferential groove 7 side. In the present embodiment, the maximum depth of the inner side portion 32 is the maximum depth of the shallow groove portion 16. The inner side portion 32 includes a first groove edge 33 and a second groove edge 34. The first groove edge 33 extends almost parallel to the tire axial direction and is connected to the first crown circumferential groove 7. The first groove edge 33 forms a boundary between the ground contact surface of the first middle land portion 13 and the inclined surface 18a of the chamfered portion 18. The second groove edge 34 is inclined relative to the tire axial direction and is connected to the first crown circumferential groove 7. To the second groove edge 34, a groove wall extending along the depth direction of the shallow groove portion 16 is connected.

An angle of the first groove edge 33 relative to the tire axial direction is not greater than 5°, and the first groove edge 33 extends linearly. As shown in FIG. 2, a length L3 of the first groove edge 33 in the tire axial direction is, for example, 5% to 15% of a width W9 of the ground contact surface of the first middle land portion 13 in the tire axial direction, and is specifically 2.0 to 5.0 mm. An angle of the second groove edge 34 relative to the tire axial direction is, for example, 45 to 70°, and the second groove edge 34 extends linearly. The inner side portion 32 that includes the first groove edge 33 and the second groove edge 34 having such structures allows well-balanced enhancement of uneven wear resistance and wet performance.

From a similar viewpoint, an opening width W6 of the inner side portion 32 on the first crown circumferential groove 7 side is, for example, 30% to 70% of the groove width W1 (shown in FIG. 1) of the first crown circumferential groove 7.

As shown in FIG. 3, the inclined surface 18a of the chamfered portion 18 has a tire-axial width that is, for example, reduced from the first groove edge 33 toward the end of the acute-angle-side corner portion 17. As shown in FIG. 4, an angle θ2 of the inclined surface 18a relative to the tire radial direction is, for example, 30 to 70° and preferably 50 to 70°. The chamfered portion 18 having such a structure can effectively push back water toward the rear portion of the tire in conjunction with the first crown circumferential groove 7 while reducing uneven wear.

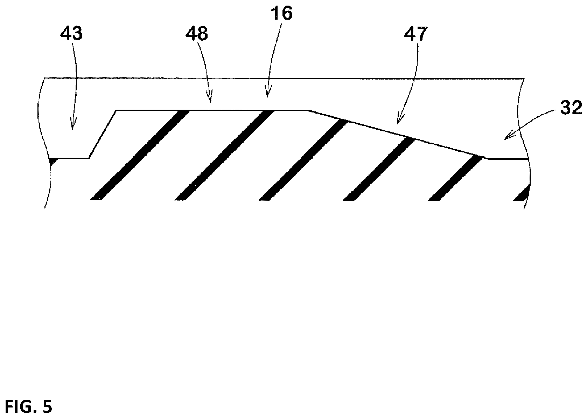

FIG. 5 is a cross-sectional view of the shallow groove portion 16 as taken along a line B-B in FIG. 3. As shown in FIG. 5, the shallow groove portion 16 includes a depth changing portion 47 and a constant depth portion 48. The depth changing portion 47 is connected to the tire-axially outer side of the inner side portion 32, and the constant depth portion 48 is connected to the tire-axially outer side of the depth changing portion 47. The depth changing portion 47 has a depth reduced from the inner side portion 32 toward the constant depth portion 48. The constant depth portion 48 extends with a constant depth. The shallow groove portion 16 that includes the depth changing portion 47 and the constant depth portion 48 having such structures contributes to well-balanced enhancement of uneven wear resistance and wet performance.

The maximum depth of the depth changing portion 47 is, for example, 1.0 to 3.0 mm. The depth of the depth changing portion 47 is continuously reduced from the inner side portion 32 toward the constant depth portion 48. The depth of the constant depth portion 48 is, for example, 0.5 to 0.9 mm.

As shown in FIG. 3, the depth changing portion 47 has a groove width reduced from the inner side portion 32 toward the constant depth portion 48. The maximum groove width of the depth changing portion 47 is, for example, 0.8 to 3.0 mm. The groove width of the constant depth portion 48 is, for example, 0.5 to 0.7 mm.

In the present embodiment, one of groove edges of the shallow groove portion 16 extends linearly from the inner side portion 32 through the depth changing portion 47 to the constant depth portion 48. The other of the groove edges of the shallow groove portion 16 is bent at a boundary between the inner side portion 32 and the depth changing portion 47 and a boundary between the depth changing portion 47 and the constant depth portion 48. However, the shallow groove portion 16 of the present invention is not limited to such a structure.

The first middle lateral groove 41 includes a body portion 43 extending from the shallow groove portion 16 to the first shoulder circumferential groove 5. The body portion 43 is, for example, disposed at an angle less than an angle of the shallow groove portion 16, relative to the tire axial direction. An angle of the body portion 43 relative to the tire axial direction is, for example, not greater than 10°. The body portion 43 having such a structure supplies a frictional force in the tire circumferential direction and enhances traction during running on a wet road surface.

As shown in FIG. 2, a length L11 of the body portion 43 in the tire axial direction is, for example, 40% to 60% of the width W9 of the ground contact surface of the first middle land portion 13 in the tire axial direction. The first middle lateral groove 41 that includes the body portion 43 having such a structure contributes to well-balanced enhancement of steering stability and wet performance.

The maximum groove width of the body portion 43 is, for example, 40% to 70% of the groove width of the first shoulder circumferential groove 5. The body portion 43 includes, for example, a large width portion 43a that is connected to the first shoulder circumferential groove 5 and has the maximum groove width in the body portion 43, and a small width portion 43b having a groove width less than that of the large width portion 43a. The groove width of the small width portion 43b is 60% to 90% of the groove width of the large width portion 43a.

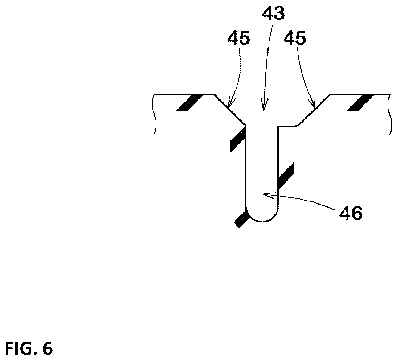

FIG. 6 is a cross-sectional view taken along a line C-C in FIG. 3. As shown in FIG. 6, edges of the body portion 43 of the first middle lateral groove 41 are preferably formed as chamfered portions 45. A narrow groove portion 46 having a width of 0.5 to 1.5 mm is connected so as to be disposed inward of the chamfered portions 45 in the tire radial direction. The maximum depth of the body portion 43 including the chamfered portions 45 and the narrow groove portion 46 is, for example, greater than the maximum depth of the shallow groove portion 16. Specifically, the maximum depth of the body portion 43 is 40% to 60% of the maximum depth of the first shoulder circumferential groove 5. The first middle lateral groove 41 that includes the body portion 43 having such a structure can maintain stiffness in the first middle land portion 13 and enhance steering stability.

As shown in FIG. 2, in the present embodiment, the first middle land portion 13 has first middle disconnecting grooves 42 formed therein, in addition to the first middle lateral grooves 41 described above. The first middle lateral grooves 41 and the first middle disconnecting grooves 42 preferably alternate in the tire circumferential direction.

For example, the first middle disconnecting groove 42 extends from the first shoulder circumferential groove 5 and terminates in the first middle land portion 13. A length L12 of the first middle disconnecting groove 42 in the tire axial direction is, for example, less than a length of the body portion 43 of the first middle lateral groove 41 in the tire axial direction. Specifically, the length L12 of the first middle disconnecting groove 42 is 20% to 30% of the width W9 of the ground contact surface of the first middle land portion 13 in the tire axial direction. The first middle disconnecting groove 42 having such a structure can enhance wet performance while maintaining stiffness in the first middle land portion 13.

The cross-section of the first middle disconnecting groove 42 is substantially the same as the cross-section, shown in FIG. 6, of the body portion 43 of the first middle lateral groove 41. Therefore, the structure of the cross-section of the first middle lateral groove 41 can be applied to the cross-section of the first middle disconnecting groove 42.

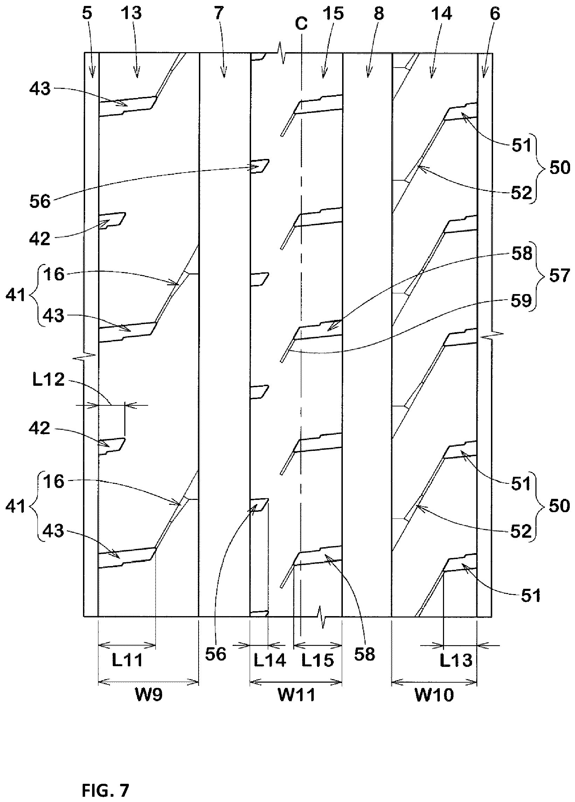

FIG. 7 is an enlarged view of the first middle land portion 13, the second middle land portion 14, and the crown land portion 15 in FIG. 1. As shown in FIG. 7, the second middle land portion 14 has a plurality of second middle lateral grooves 50 formed therein. The second middle lateral groove 50 includes a body portion 51 extending from the second shoulder circumferential groove 6, and a shallow groove portion 52 extending from the body portion 51 to the second crown circumferential groove 8. The structures of the body portion 43 and the shallow groove portion 16 of the first middle lateral groove 41 described above can be applied to the body portion 51 and the shallow groove portion 52 of the second middle lateral groove 50 except for the matters described below.

For example, the body portion 51 of the second middle lateral groove 50 terminates without extending across the center position of the ground contact surface of the second middle land portion 14 in the tire axial direction. A length L13 of the body portion 51 of the second middle lateral groove 50 in the tire axial direction is 30% to 50% of a width W10 of the ground contact surface of the second middle land portion 14 in the tire axial direction. In a more preferable mode, the length L13 of the body portion 51 of the second middle lateral groove 50 in the tire axial direction is less than the length L11 of the body portion 43 of the first middle lateral groove 41 in the tire axial direction. The second middle lateral groove 50 that includes the body portion 51 having such a structure can enhance wet performance while appropriately maintaining stiffness in the second middle land portion 14.

The crown land portion 15 has a plurality of first crown lateral grooves 56 and a plurality of second crown lateral grooves 57 formed therein.

The first crown lateral groove 56 extends from the first crown circumferential groove 7 and terminates in the crown land portion 15 without reaching the second crown circumferential groove 8. A length L14 of the first crown lateral groove 56 in the tire axial direction is, for example, 10% to 30% of a width W11 of the ground contact surface of the crown land portion 15 in the tire axial direction. In a preferable mode, the length L14 of the first crown lateral groove 56 is less than each of the length L11 of the body portion 43 of the first middle lateral groove 41 in the tire axial direction, the length L12 of the first middle disconnecting groove 42 in the tire axial direction, and the length L13 of the body portion 51 of the second middle lateral groove 50 in the tire axial direction. The first crown lateral groove 56 having such a structure can assuredly maintain stiffness in the crown land portion 15 and can enhance steering stability while aiding in enhancement of wet performance.

The second crown lateral groove 57 includes, for example, a body portion 58 extending from the second crown circumferential groove 8 in the tire axial direction and a shallow groove portion 59 that extends from the body portion 58 and terminates without reaching the first crown circumferential groove 7.

The body portion 58 of the second crown lateral groove 57 extends from the second crown circumferential groove 8 and terminates in the crown land portion 15 without reaching the first crown circumferential groove 7. A length L15 of the body portion 58 of the second crown lateral groove 57 in the tire axial direction is, for example, 45% to 60% of the width W11 of the ground contact surface of the crown land portion 15 in the tire axial direction. In a preferable mode, the length L15 of the body portion 58 of the second crown lateral groove 57 is less than the length L11 of the body portion 43 of the first middle lateral groove 41 in the tire axial direction, and greater than the length L13 of the body portion 51 of the second middle lateral groove 50 in the tire axial direction. The second crown lateral groove 57 that includes the body portion 58 having such a structure contributes to well-balanced enhancement of steering stability and wet performance.

A groove width and a depth of the shallow groove portion 59 of the second crown lateral groove 57 are, for example, 0.3 to 1.5 mm and preferably 0.5 to 1.0 mm. For example, the shallow groove portion 59 of the second crown lateral groove 57 extends at an angle greater than that of the body portion 58, relative to the tire axial direction. The shallow groove portion 59 of the second crown lateral groove 57 is inclined in the same direction as the direction of the shallow groove portion 16 of the first middle lateral groove 41. An angle of the shallow groove portion 59 of the second crown lateral groove 57 relative to the tire axial direction is, for example, 50 to 70°. The second crown lateral groove 57 that includes the shallow groove portion 59 having such a structure contributes to enhancement of cornering performance during running on a wet road surface.

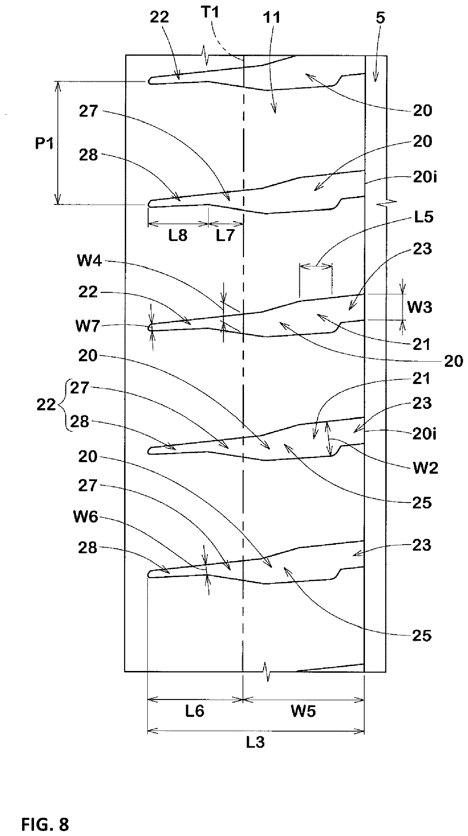

FIG. 8 is an enlarged view of the first shoulder land portion 11. As shown in FIG. 8, the first shoulder land portion 11 has a plurality of first shoulder lateral grooves 20 formed therein. The first shoulder lateral groove 20 extends from the first shoulder circumferential groove 5 to a position beyond the first tread end T1.

At least one of the first shoulder lateral grooves 20 includes an inner end 20i connected to the first shoulder circumferential groove 5, a maximum groove width portion 21 having a maximum groove width W2 in the first shoulder lateral groove 20, and an outer side portion 22 located outward of the first tread end T1 in the tire axial direction. The maximum groove width portion 21 also includes a portion having a groove width of not less than 95% of the maximum groove width W2 in addition to the portion forming the maximum groove width W2.

In the present embodiment, the maximum groove width portion 21 is located almost at the center of the ground contact surface of the first shoulder land portion 11 in the tire axial direction. This structure includes at least a structure in which the maximum groove width portion 21 extends across the center position of the ground contact surface of the first shoulder land portion 11 in the tire axial direction. Furthermore, the structure includes a structure in which, although the maximum groove width portion 21 does not extend across the center position, a distance between the maximum groove width portion 21 and the center position is not greater than 5% of a width W5 of the ground contact surface of the first shoulder land portion 11 in the tire axial direction. The first shoulder lateral groove that includes the maximum groove width portion 21 having such a structure can exhibit excellent drainage performance while maintaining steering stability.

A groove width W3 of the first shoulder lateral groove 20 at the inner end 20i and a groove width W4 of the first shoulder lateral groove 20 on the first tread end T1 are each less than the maximum groove width W2. The outer side portion 22 of the first shoulder lateral groove 20 has a groove width reduced outward in the tire axial direction. Thus, stiffness of the first shoulder land portion 11 is maintained and excellent steering stability is exhibited.

The groove width W3 of the first shoulder lateral groove 20 at the inner end 20i is, for example, 50% to 90% of the maximum groove width W2, and is preferably 70% to 80% thereof. The first shoulder lateral groove 20 that includes the inner end 20i having such a structure contributes to well-balanced enhancement of steering stability and wet performance.

The maximum groove width W2 is, for example, 20% to 35% of one pitch length P1 of the first shoulder lateral groove 20 in the tire circumferential direction . A length L5 of the maximum groove width portion 21 in the tire axial direction is, for example, 25% to 45% of the width W5 of the ground contact surface of the first shoulder land portion 11 in the tire axial direction, and is preferably 30% to 40% thereof. The first shoulder lateral groove 20 that includes the maximum groove width portion 21 having such a structure can exhibit excellent wet performance while maintaining steering stability.

In the present embodiment, for example, the outer side portion 22 preferably has a groove width reduced continuously from the first tread end T1 outward in the tire axial direction. Thus, uneven wear around the outer side portion 22 is reduced. However, the present invention is not limited thereto, and the outer side portion 22 may include, for example, a portion extending with a constant groove width.

The outer side portion 22 includes, for example, a first portion 27 on the first tread end T1 side and a second portion 28 located outward of the first portion 27 in the tire axial direction. An angle between two edges of the first portion 27 is, for example, 10 to 25°. An angle between two edges of the second portion 28 is less than the angle for the first portion 27, and is, for example, less than 10°.

A length L6 of the outer side portion 22 in the tire axial direction is, for example, not greater than the width W5 of the ground contact surface of the first shoulder land portion 11 in the tire axial direction. Specifically, the length L6 is 70% to 90% of the width W5 and is preferably 75% to 85% thereof. A length L7 of the first portion 27 in the tire axial direction is 20% to 50% of the length L6 of the outer side portion 22 in the tire axial direction. A length L8 of the second portion 28 in the tire axial direction is 50% to 80% of the length L6 of the outer side portion 22 in the tire axial direction. The outer side portion 22 having such a structure allows well-balanced enhancement of steering stability and wet performance.

For example, the first shoulder lateral groove 20 has the maximum depth at a body portion 25. The maximum depth of the first shoulder lateral groove 20 is, for example, 60% to 90% of the maximum depth of the first shoulder circumferential groove 5, and is preferably 70% to 80% thereof.

An inner side portion 23 has a depth less than that of the body portion 25. The maximum depth of the inner side portion 23 is, for example, 45% to 65% of the maximum depth of the first shoulder lateral groove 20 and is preferably 50% to 60% thereof.

For example, the outer side portion 22 has a depth reduced outward in the tire axial direction. The depth, at the outer end, of the first shoulder lateral groove 20 is, for example, 5% to 25% of the maximum depth of the first shoulder lateral groove 20 and is preferably 10% to 20% thereof. The outer side portion 22 having such a structure contributes to well-balanced enhancement of steering stability and wet performance.

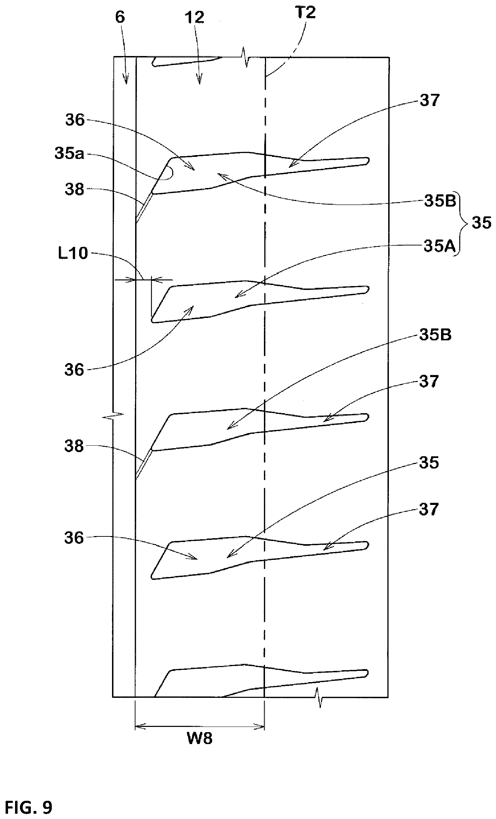

FIG. 9 is an enlarged view of the second shoulder land portion 12. As shown in FIG. 9, the second shoulder land portion 12 has a plurality of second shoulder lateral grooves 35 formed therein. In the present embodiment, the second shoulder lateral groove 35 includes, for example, a body portion 36 extending from a position distant from the second shoulder circumferential groove 6 to the second tread end T2, and an outer side portion 37 located outward of the second tread end T2 in the tire axial direction. The structure of the outer side portion 22 (shown in FIG. 8) of the first shoulder lateral groove 20 as described above can be applied to the outer side portion 37 of the second shoulder lateral groove 35. The structure of the body portion 25 of the first shoulder lateral groove 20 can be applied to the body portion 36 of the second shoulder lateral groove 35 except for the structure described below.

A distance L10 in the tire axial direction from the body portion 36 of the second shoulder lateral groove 35 to the second shoulder circumferential groove 6 is, for example, 5% to 15% of a width W8 of the ground contact surface of the second shoulder land portion 12 in the tire axial direction. The second shoulder lateral groove 35 that includes the body portion 36 having such a structure can enhance wet performance while maintaining stiffness in the second shoulder land portion 12.

The body portion 36 of the second shoulder lateral groove 35 includes an inclined edge 35a extending so as to be inclined relative to the tire circumferential direction, at the inner end in the tire axial direction. An angle of the inclined edge 35a relative to the tire circumferential direction is, for example, 20 to 40°. The inclined edge 35a having such a structure supplies a frictional force also in the tire axial direction and enhances cornering performance on a wet road surface.

The second shoulder lateral grooves 35 of the present embodiment include standard second shoulder lateral grooves 35A and shallow-groove-equipped second shoulder lateral grooves 35B. In the present embodiment, the standard second shoulder lateral grooves 35A and the shallow-groove-equipped second shoulder lateral grooves 35B alternate in the tire circumferential direction.

The standard second shoulder lateral groove 35A has no groove between the body portion 36 and the second shoulder circumferential groove 6. The shallow-groove-equipped second shoulder lateral groove 35B includes a shallow groove portion 38 extending from the body portion 36 to the second shoulder circumferential groove 6. The groove width and the depth of the shallow groove portion 38 are, for example, 0.3 to 1.5 mm and preferably 0.5 to 1.0 mm. The shallow groove portion 38 having such a structure can aid in supplying a frictional force in the tire axial direction on a wet road surface.

Although the tire according to one embodiment of the present invention has been described above in detail, the present invention is not limited to the above-described specific embodiments, and various modifications can be made to practice the present invention in accordance with the appended claims.

### EXAMPLES

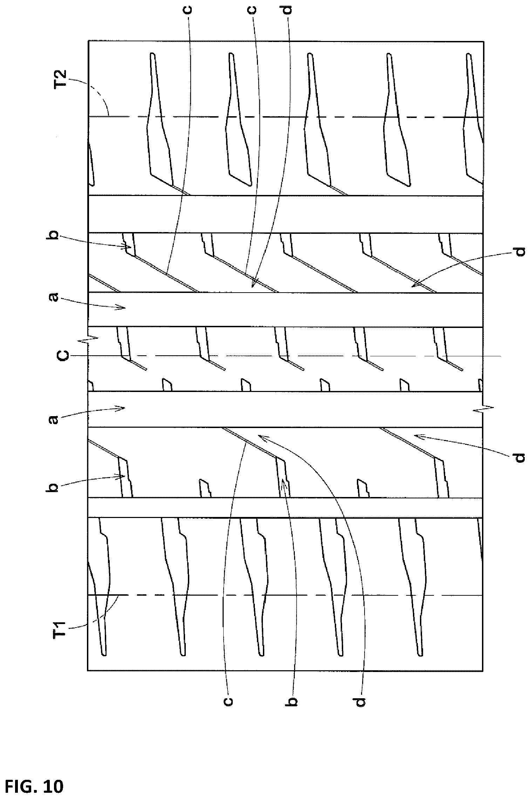

Tires having the basic pattern shown in FIG. 1 and the size of 225/50R17 were produced as sample tires according to the specifications in Tables 1 to 2. As a comparative example, a tire having a tread portion shown in FIG. 10 was produced as a sample tire. The tire of the comparative example had no chamfered portion at an acute-angle-side corner portion d demarcated between a crown circumferential groove a and a shallow groove portion c of a middle lateral groove b. The tire of the comparative example was substantially the same as the tire shown in FIG. 1 except for the above-described matter. Uneven wear resistance and wet performance were tested for each test tire. The specifications common to the test tires and a testing method were as follows.
Rim on which the tire was mounted: 17×7.5J
Tire internal pressure: 220 kPa for front wheels, 240 kPa for rear wheels
Test vehicle: rear-wheel-drive car having an engine displacement of 2000 cc
Positions at which the tires were mounted: all wheels

### <Uneven wear resistance>

After the above-described test vehicle ran over a certain distance, a degree of uneven wear in the first middle land portion was visually evaluated. The results are indicated as scores with the degree of the uneven wear of the comparative example being 100. The greater the value of the score is, the more excellent uneven wear resistance is.

### <Wet performance>

When the above-described test vehicle ran on a wet road surface, a driver made sensory evaluation for wet performance. The results are indicated as scores with wet performance of the comparative example being 100. The greater the value of the score is, the more excellent wet performance is.

The test results are indicated in Tables 1 to 2.

**[Table 1]**

| | Comp. Ex. | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Figure showing tread pattern | FIG. 10 | FIG. 1 | FIG. 1 | FIG. 1 | FIG. 1 | FIG. 1 | FIG. 1 | FIG. 1 | FIG. 1 | FIG. 1 |
| Angle θ1(°) between first crown circumferential groove and shallow groove portion | 30 | 30 | 20 | 25 | 35 | 40 | 30 | 30 | 30 | 30 |
| Length L3 of first groove edge/width W9 of first middle land portion (%) | - | 9.0 | 9.0 | 9.0 | 9.0 | 9.0 | 5.0 | 7.5 | 10.5 | 15.0 |
| Angle θ2 (°) of inclined surface of chamfered portion | - | 60 | 60 | 60 | 60 | 60 | 60 | 60 | 60 | 60 |
| Maximum depth (mm) of shallow groove portion | 3.0 | 3.0 | 3.0 | 3.0 | 3.0 | 3.0 | 3.0 | 3.0 | 3.0 | 3.0 |
| Uneven wear resistance (score) | 100 | 115 | 105 | 110 | 115 | 120 | 110 | 112 | 115 | 115 |
| Wet performance (score) | 100 | 108 | 106 | 107 | 108 | 106 | 106 | 107 | 108 | 110 |

**[Table 2]**

| | Ex. 10 | Ex. 11 | Ex. 12 | Ex. 13 | Ex. 14 | Ex. 15 | Ex. 16 | Ex. 17 |
|---|---|---|---|---|---|---|---|---|
| Figure showing tread pattern | FIG. 1 | FIG. 1 | FIG. 1 | FIG. 1 | FIG. 1 | FIG. 1 | FIG. 1 | FIG. 1 |
| Angle θ1(°) between first crown circumferential groove and shallow groove portion | 30 | 30 | 30 | 30 | 30 | 30 | 30 | 30 |
| Length L3 of first groove edge/width W9 of first middle land portion (%) | 9.0 | 9.0 | 9.0 | 9.0 | 9.0 | 9.0 | 9.0 | 9.0 |
| Angle θ2 (°) of inclined surface of chamfered portion | 50 | 55 | 65 | 70 | 60 | 60 | 60 | 60 |
| Maximum depth (mm) of shallow groove portion | 3.0 | 3.0 | 3.0 | 3.0 | 2.0 | 2.5 | 3.5 | 4.0 |
| Uneven wear resistance (score) | 105 | 110 | 115 | 120 | 117 | 115 | 110 | 105 |
| Wet performance (score) | 108 | 108 | 107 | 105 | 104 | 106 | 108 | 110 |

As indicated in Tables 1 to 2, the tires of the examples were confirmed to enhance wet performance while reducing uneven wear.

## Claims

1. A tire (1) comprising
a tread portion (2), wherein
the tread portion (2) includes a plurality of circumferential grooves (3) extending continuously in a tire circumferential direction between a first tread end (T1) and a second tread end (T2), and a plurality of land portions (4) demarcated by the plurality of circumferential grooves (3),
the plurality of circumferential grooves (3) include a first shoulder circumferential groove (5) disposed between a tire equator (C) and the first tread end (T1), and a first crown circumferential groove (7) disposed between the first shoulder circumferential groove (5) and the tire equator (C),
the plurality of land portions (4) include a first middle land portion (13) demarcated between the first shoulder circumferential groove (5) and the first crown circumferential groove (7),
the first middle land portion (13) has a plurality of first middle lateral grooves (41) formed therein,
at least one of the first middle lateral grooves (41) includes a shallow groove portion (16) extending from the first crown circumferential groove (7) so as to be inclined relative to a tire axial direction, the shallow groove portion (16) including an inner side portion (32) on the first crown circumferential groove side,
the first middle land portion (13) includes an acute-angle-side corner portion (17) demarcated between the first crown circumferential groove (7) and the shallow groove portion (16) in a tread planar view,
a chamfered portion (18) is formed at an end portion (17a), in the tire circumferential direction, of the acute-angle-side corner portion (17), and
the chamfered portion (18) includes an inclined surface (18a) that extends from a ground contact surface of the first middle land portion (13) toward an end of the acute-angle-side corner portion (17), and is inclined relative to a tire radial direction,
**characterized in that** the inner side portion (32) includes a first groove edge (33) that extends almost parallel to the tire axial direction and is connected to the first crown circumferential groove (7), and a second groove edge (34) that is inclined relative to the tire axial direction and is connected to the first crown circumferential groove (7).

2. The tire (1) according to claim 1, wherein the first groove edge (33) forms a boundary between the ground contact surface of the first middle land portion (13) and the inclined surface (18a) of the chamfered portion (18).

3. The tire (1) according to claim 1 or 2, wherein the first groove edge (33) extends linearly.

4. The tire (1) according to any one of claims 1 to 3, wherein
the shallow groove portion (16) includes the inner side portion (32) on the first crown circumferential groove side, a depth changing portion (47) connected to the inner side portion (32), and a constant depth portion (48) connected to the depth changing portion (47),
the depth changing portion (47) has a depth reduced toward the constant depth portion (48), and
the constant depth portion (48) extends with a constant depth.

5. The tire (1) according to claim 4, wherein the depth changing portion (47) has a groove width reduced toward the constant depth portion (48).

6. The tire (1) according to claim 4 or 5, wherein one of groove edges of the shallow groove portion (16) extends linearly from the inner side portion (32) to the constant depth portion (48).

7. The tire (1) according to any one of claims 1 to 6, wherein an angle (θ1) between the first crown circumferential groove (7) and the shallow groove portion (16) is 20 to 45°.

8. The tire (1) according to any one of claims 1 to 7, wherein each first middle lateral groove (41) includes a body portion (43) extending from the shallow groove portion (16) to the first shoulder circumferential groove (5).

9. The tire (1) according to claim 8, wherein the body portion (43) is disposed at an angle less than an angle of the shallow groove portion (16), relative to the tire axial direction.

10. The tire (1) according to claim 8 or 9, wherein a maximum depth of the body portion (43) is greater than a maximum depth of the shallow groove portion (16).

## Patentansprüche

1. Reifen (1), umfassend
einen Laufflächenabschnitt (2), wobei
der Laufflächenabschnitt (2) eine Vielzahl von Umfangsrillen (3), die sich kontinuierlich in einer Reifenumfangsrichtung zwischen einem ersten Laufflächenende (T1) und einem zweiten Laufflächenende (T2) erstrecken, und eine Vielzahl von Landabschnitten (4) umfasst, die durch die Vielzahl von Umfangsrillen (3) abgegrenzt sind,
die Vielzahl von Umfangsrillen (3) eine erste Schulterumfangsrille (5), die zwischen einem Reifenäquator (C) und dem ersten Laufflächenende (T1) angeordnet ist, und eine erste Kronenumfangsrille (7) umfassen, die zwischen der ersten Schulterumfangsrille (5) und dem Reifenäquator (C) angeordnet ist,
die Vielzahl von Landabschnitten (4) einen ersten mittleren Landabschnitt (13) umfassen, der zwischen der ersten Schulterumfangsrille (5) und der ersten Kronenumfangsrille (7) abgegrenzt ist,
in dem ersten mittleren Landabschnitt (13) eine Vielzahl von ersten mittleren Querrillen (41) ausgebildet sind,
mindestens eine der ersten mittleren Querrillen (41) einen flachen Rillenabschnitt (16) umfasst, der sich von der ersten Kronenumfangsrille (7) so erstreckt, dass er relativ zu einer Reifenaxialrichtung geneigt ist, wobei der flache Rillenabschnitt (16) einen inneren Seitenabschnitt (32) auf der Seite der ersten Kronenumfangsrille umfasst,
der erste mittlere Landabschnitt (13) einen spitzwinkelseitigen Eckenabschnitt (17) umfasst, der in einer planaren Ansicht der Lauffläche zwischen der ersten Kronenumfangsrille (7) und dem flachen Rillenabschnitt (16) abgegrenzt ist,
ein angefaster Abschnitt (18) an einem Endabschnitt (17a) in der Reifenumfangsrichtung des spitzwinkelseitigen Eckenabschnitts (17) ausgebildet ist, und
der angefaste Abschnitt (18) eine geneigte Fläche (18a) umfasst, die sich von einer Bodenkontaktfläche des ersten mittleren Landabschnitts (13) zu einem Ende des spitzwinkelseitigen Eckenabschnitts (17) erstreckt und relativ zu einer Reifenradialrichtung geneigt ist,
**dadurch gekennzeichnet, dass** der innere Seitenabschnitt (32) eine erste Rillenkante (33), die sich annähernd parallel zu der Reifenaxialrichtung erstreckt und mit der ersten Kronenumfangsrille (7) verbunden ist, und eine zweite Rillenkante (34) umfasst, die relativ zu der Reifenaxialrichtung geneigt ist und mit der ersten Kronenumfangsrille (7) verbunden ist.

2. Reifen (1) nach Anspruch 1, wobei die erste Rillenkante (33) eine Grenze zwischen der Bodenkontaktfläche des ersten mittleren Landabschnitts (13) und der geneigten Fläche (18a) des angefasten Abschnitts (18) bildet.

3. Reifen (1) nach Anspruch 1 oder 2, wobei sich die erste Rillenkante (33) geradlinig erstreckt.

4. Reifen (1) nach einem der Ansprüche 1 bis 3, wobei
der flache Rillenabschnitt (16) den inneren Seitenabschnitt (32) auf der Seite der ersten Kronenumfangsrille, einen Abschnitt (47) mit veränderlicher Tiefe, der mit dem inneren Seitenabschnitt (32) verbunden ist, und einen Abschnitt (48) mit konstanter Tiefe, der mit dem Abschnitt (47) mit veränderlicher Tiefe verbunden ist, umfasst,
der Abschnitt (47) mit veränderlicher Tiefe eine zum Abschnitt (48) mit konstanter Tiefe hin verringerte Tiefe aufweist, und
der Abschnitt mit konstanter Tiefe (48) sich mit einer konstanten Tiefe erstreckt.

5. Reifen (1) nach Anspruch 4, wobei der Abschnitt (47) mit veränderlicher Tiefe eine zum Abschnitt (48) mit konstanter Tiefe hin reduzierte Rillenbreite aufweist.

6. Reifen (1) nach Anspruch 4 oder 5, wobei eine der Rillenkanten des flachen Rillenabschnitts (16) sich von dem inneren Seitenabschnitt (32) zu dem Abschnitt (48) mit konstanter Tiefe geradlinig erstreckt.

7. Reifen (1) nach einem der Ansprüche 1 bis 6, wobei ein Winkel (θ1) zwischen der ersten Kronenumfangsrille (7) und dem flachen Rillenabschnitt (16) 20 bis 45° beträgt.

8. Reifen (1) nach einem der Ansprüche 1 bis 7, wobei jede erste mittlere Querrille (41) einen Körperabschnitt (43) umfasst, der sich von dem flachen Rillenabschnitt (16) zu der ersten Schulterumfangsrille (5) erstreckt.

9. Reifen (1) nach Anspruch 8, wobei der Körperabschnitt (43) in einem Winkel relativ zu der Reifenaxialrichtung angeordnet ist, der kleiner ist als der Winkel des flachen Rillenabschnitts (16).

10. Reifen (1) nach Anspruch 8 oder 9, wobei die maximale Tiefe des Körperabschnitts (43) größer ist als die maximale Tiefe des flachen Rillenabschnitts (16).

## Revendications

1. Pneumatique (1) comprenant
une portion formant bande de roulement (2), dans lequel la portion formant bande de roulement (2) inclut une pluralité de rainures circonférentielles (3) s'étendant en continu dans une direction circonférentielle du pneumatique entre une première extrémité de bande de roulement (T1) et une seconde extrémité de bande de roulement (T2), et une pluralité de portions en relief (4) est délimitée par la pluralité de rainures circonférentielles (3),
la pluralité de rainures circonférentielles (3) incluent une première rainure circonférentielle d'épaulement (5) disposée entre un équateur de pneumatique (C) et la première extrémité de bande de roulement (T1), et une première rainure circonférentielle de couronne (7) disposée entre la première rainure circonférentielle d'épaulement (5) et l'équateur de pneumatique (C),
la pluralité de portions en relief (4) incluent une première portion en relief médiane (13) délimitée entre la première rainure circonférentielle d'épaulement (5) et la première rainure circonférentielle de couronne (7),
la première portion en relief médiane (13) a une pluralité de premières rainures latérales médianes (41) formées à l'intérieur de celle-ci,
l'une au moins des premières rainures latérales médianes (41) inclut une portion de rainure peu profonde (16) s'étendant depuis la première rainure circonférentielle de couronne (7) de manière à être inclinée relativement à une direction axiale du pneumatique, la portion de rainure peu profonde (16) incluant une portion latérale intérieure (32) sur le côté de la première rainure circonférentielle de couronne,
la première portion en relief médiane (13) inclut une portion de coin côté angle aigu (17) délimitée entre la première rainure circonférentielle de couronne (7) et la portion de rainure peu profonde (16) dans une vue planaire de bande de roulement,
une portion chanfreinée (18) est formée au niveau d'une portion d'extrémité (17a), dans la direction circonférentielle du pneumatique, de la portion de coin côté angle aigu (17), et
la portion chanfreinée (18) inclut une surface inclinée (18a) qui s'étend depuis une surface de contact au sol de la première portion en relief médiane (13) vers une extrémité de la portion de coin côté angle aigu (17), et est inclinée relativement à une direction radiale du pneumatique,
**caractérisé en ce que** la portion latérale intérieure (32) inclut un premier bord de rainure (33) qui s'étend pratiquement parallèlement à la direction axiale du pneumatique et qui est connecté à la première rainure circonférentielle de couronne (7), et un second bord de rainure (34) qui est incliné relativement à la direction axiale du pneumatique et qui est connecté à la première rainure circonférentielle de couronne (7).

2. Pneumatique (1) selon la revendication 1, dans lequel le premier bord de rainure (33) forme une frontière entre la surface de contact au sol de la première portion en relief médiane (13) et la surface inclinée (18a) de la portion chanfreinée (18).

3. Pneumatique (1) selon la revendication 1 ou 2, dans lequel le premier bord de rainure (33) s'étend linéairement.

4. Pneumatique (1) selon l'une quelconque des revendications 1 à 3, dans lequel
la portion de rainure peu profonde (16) inclut la portion latérale intérieure (32) sur le côté de la première rainure circonférentielle de couronne, une portion à profondeur changeante (47) connectée à la portion latérale intérieure (32), et une portion à profondeur constante (48) connectée à la portion à profondeur changeante (47),
la portion à profondeur changeante (47) a une profondeur réduite vers la portion à profondeur constante (48), et
la portion à profondeur constante (48) s'étend avec une profondeur constante.

5. Pneumatique (1) selon la revendication 4, dans lequel la portion à profondeur changeante (47) a une largeur de rainure réduite vers la portion à profondeur constante (48).

6. Pneumatique (1) selon la revendication 4 ou 5, dans lequel l'un des bords de rainure de la portion de rainure peu profonde (16) s'étend linéairement depuis la portion latérale intérieure (32) jusqu'à la portion à profondeur constante (48).

7. Pneumatique (1) selon l'une quelconque des revendications 1 à 6, dans lequel un angle (θ1) entre la première rainure circonférentielle de couronne (7) et la portion de rainure peu profonde (16) est de 20 à 45°.

8. Pneumatique (1) selon l'une quelconque des revendications 1 à 7, dans lequel chaque première rainure latérale médiane (41) inclut une portion formant corps (43) s'étendant depuis la portion de rainure peu profonde (16) jusqu'à la première rainure circonférentielle d'épaulement (5).

9. Pneumatique (1) selon la revendication 8, dans lequel la portion formant corps (43) est disposée sous un angle inférieur à un angle de la portion de rainure peu profonde (16), relativement à la direction axiale du pneumatique.

10. Pneumatique (1) selon la revendication 8 ou 9, dans lequel une profondeur maximum de la portion formant corps (43) est supérieure à une profondeur maximum de la portion de rainure peu profonde (16).
